(19) Europäisches Patentamt European Patent Office Office européen des brevets

(11) **EP 4 654 332 A1**

(12) **EUROPEAN PATENT APPLICATION**
published in accordance with Art. 153(4) EPC

(43) Date of publication:
26.11.2025 Bulletin 2025/48

(21) Application number: 24752676.7

(22) Date of filing: 18.01.2024

(51) International Patent Classification (IPC):
H01M 10/613 (2014.01)     H01M 10/6556 (2014.01)
H01M 10/6563 (2014.01)    H01M 50/244 (2021.01)
B65D 90/22 (2006.01)

(52) Cooperative Patent Classification (CPC):
B65D 90/22; H01M 10/613; H01M 10/6556;
H01M 10/6563; H01M 10/663; H01M 50/244;
Y02E 60/10

(86) International application number:
PCT/CN2024/072897

(87) International publication number:
WO 2024/164819 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.02.2023 CN 202310106884

(71) Applicant: Xiamen Hithium Energy Storage
Technology Co., Ltd.
Xiamen, Fujian 361100 (CN)

(72) Inventor: HUANG, Shoutao
Xiamen, Fujian 361100 (CN)

(74) Representative: DREISS Patentanwälte PartG
mbB
Friedrichstraße 6
70174 Stuttgart (DE)

(54) **ENERGY STORAGE SYSTEM**

(57) An energy storage system (100) comprising an accommodating compartment (12), in which an accommodation space (20) is arranged, a mounting plate (22) being arranged at the top of the accommodating space (20); a battery module (13), which is arranged in the accommodation space (20); an air duct assembly (14), which is located in the accommodating space (20) and is configured to dissipate heat from the battery module (13); and an adapter assembly (18), by means of which the air duct assembly (14) is in connection with the mounting plate (22); wherein the adapter assembly (18) is fixedly connected to the mounting plate (22), and the adapter assembly (18) is detachably connected to the air duct assembly (14).

FIG. 4

EP 4 654 332 A1

# Description

## PRIORITY INFORMATION

This application claims priority to and benefits of Chinese Patent Application No. 2023101068848, filed with China National Intellectual Property Administration on February 10, 2023, the entire disclosure of which is incorporated herein by reference.

## FIELD

The present disclosure relates to the field of energy storage technologies, and more particularly, to an energy storage system.

## BACKGROUND

In the related art, an energy storage system includes an air duct assembly configured to guide cold air from an air conditioning system towards a cluster rack to cool a battery module on the cluster rack. Currently, the air duct assembly is mounted directly at a top of the cluster rack, at a back of the cluster rack, or at a top insulation plate or a top crossbeam inside an accommodation compartment. Such configurations not only make maintenance and component replacement of an energy storage system inconvenient but also pose a risk of displacement of the air duct assembly due to an unreliable connection, which brings great problems to air duct heat dissipation and an engagement between the air duct assembly and an air outlet of an air conditioner.

## SUMMARY

Embodiments of the present disclosure provide an energy storage system.

The energy storage system according to the embodiments of the present disclosure includes an accommodation compartment, a battery module, an air duct assembly, and an adapter assembly. The accommodation compartment has an accommodation space. The mounting plate is provided in the accommodation space and at a top of the accommodation space. The battery module is disposed in the accommodation space. The air duct assembly is located in the accommodation space. The air duct assembly is configured to dissipate heat from the battery module. The adapter assembly is configured to connect the air duct assembly with the mounting plate. The adapter assembly is fixedly connected to the mounting plate. The adapter assembly is detachably connected to the air duct assembly.

In the above energy storage system, since the air duct assembly is mounted on the mounting plate at the top of the accommodation space through the adapter assembly, a connection area between the adapter assembly and the mounting plate is relatively large, which can reduce deformation of the mounting plate. Therefore, positional displacement of the air duct assembly caused by the deformation of the mounting plate is reduced. Thus, an adverse effect on air duct heat dissipation and an influence on an engagement between the air duct assembly and an air outlet of an air conditioner are mitigated. As a result, a utilization rate of the cold air for the heat dissipation blown out by the air conditioner is maximized. In this way, a heat dissipation effect is improved. Meanwhile, the detachable connection between the adapter assembly and the air duct assembly also facilitates maintenance and component replacement of the energy storage system.

Additional aspects and advantages of the embodiments of present disclosure will be provided at least in part in the following description, or will become apparent in part from the following description, or can be learned from the practice of the embodiments of the present disclosure.

## BRIEF DESCRIPTION OF THE DRAWINGS

In order to clearly explain technical solutions of embodiments of the present disclosure or in the related art, drawings used in description of the embodiments or the related art will be briefly described below. The drawings described below merely illustrate some embodiments of the present disclosure. Based on these drawings, other drawings can be obtained by those skilled in the art without creative effort.

FIG. 1 is a perspective view of an energy storage system according to an embodiment of the present disclosure.

FIG. 2 is an internal perspective view of an energy storage system according to an embodiment of the present disclosure.

FIG. 3 is an internal plan view of an energy storage system according to an embodiment of the present disclosure.

FIG. 4 is a cross-sectional view of an energy storage system according to an embodiment of the present disclosure.

FIG. 5 is a perspective view of an air duct unit according to an embodiment of the present disclosure.

FIG. 6 is a front view of an air duct unit according to an embodiment of the present disclosure.

FIG. 7 is a top view of an air duct unit according to an embodiment of the present disclosure.

FIG. 8 is a right side view of an air duct unit according to an embodiment of the present disclosure.

FIG. 9 is an exploded view of an air duct unit according to an embodiment of the present disclosure.

FIG. 10 to FIG. 12 are structural views of a first detachable plate according to an embodiment of the present disclosure.

FIG. 13 to FIG. 16 are structural views of a second detachable plate according to an embodiment of the present disclosure.

FIG. 17 to FIG. 19 are structural views of a third detachable plate according to an embodiment of the present disclosure.

Description of reference numerals:
energy storage system 100, accommodation compartment 12, battery module 13, air duct assembly 14, adapter assembly 18, accommodation space 20, mounting plate 22, battery cluster 24, high-voltage cabinet 26, firefighting equipment 28, door frame 30, door body 32, air conditioning assembly 34, air inlet section 36, air outlet section 38, first mounting side plate 42, second mounting side plate 44, first detachable plate 46, second detachable plate 48, third detachable plate 50, blowing port 52, first connection portion 54, first fastener 56, second connection portion 55, first sub-plate 60, second sub-plate 62, bottom plate 64, support plate 66, first mounting hole 68, second mounting hole 70, second fastener 73, third connection portion 74, third fastener 76, fourth connection portion 78, fixed mounting portion 80, adjustment mounting portion 82, base plate 83, cluster rack 84, stop strip 86, air duct adapter 92.

## DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise" and "anticlockwise" refer to the directions and location relations which are the directions and location relations illustrated in the drawings, and for describing the present disclosure and for describing in simple, and which are not intended to indicate or imply that the device or the elements are disposed to locate at the specific directions or are structured and performed in the specific directions, which could not to be understood to the limitation of the present disclosure. In addition, terms such as "first" and "second" are used herein for purposes of description and are not intended to indicate or imply relative importance, or to implicitly show the number of indicated technical features. Thus, the feature defined with "first" and "second" may explicitly or implicitly include one or more of this feature. In the description of the present disclosure, "a plurality of" means two or more, unless specified otherwise.

In the description of the present disclosure, it should be noted that, unless specified or limited otherwise, terms "mounted", "connected", and "coupled" are understood broadly, For example, it is possible to provide a fixed connection or a detachable connection or an integral connection; mechanical connection or electrical connection; direct connection or indirect connection through an intermediate member. Further, the terms may refer to the internal communication between two components or the interaction relationship between two components. For those skilled in the art, the specific meaning of the above-mentioned terms in the embodiments of the present disclosure can be understood according to specific circumstances.

In the description of the present disclosure, a first characteristic being "on" or "under" a second characteristic may encompass cases where the first characteristic is in direct-contact with the second characteristic or is in contact with the second characteristic via another characteristic. Further, the first characteristic being "on", "above", "over" the second characteristic may encompass cases where the first characteristic is directly vertically over the second characteristic or is diagonally above the second characteristic, or just the horizontal height of the first characteristic is greater than the horizontal height of the second characteristic. The first characteristic being "below" or "under" the second characteristic may encompass cases where the first characteristic is directly vertically beneath the second characteristic or is diagonally under the second characteristic, or just the first characteristic is at a level lower than that of the second characteristic.

Various embodiments or examples for implementing different structures of the embodiments of the present disclosure are provided below. To simplify the present disclosure, components and settings in specific examples are described below. Of course, they are merely exemplary and are not intended to limit the present disclosure. Moreover, reference numbers and/or reference letters may be repeated in different examples of the present disclosure. Such repetition is for purposes of simplicity and clarity and is in itself indicative of a relationship among the various embodiments and/or settings discussed. In addition, the present disclosure provides examples of various specific processes and materials, but those skilled in the art may recognize application of other processes and/or use of other materials.

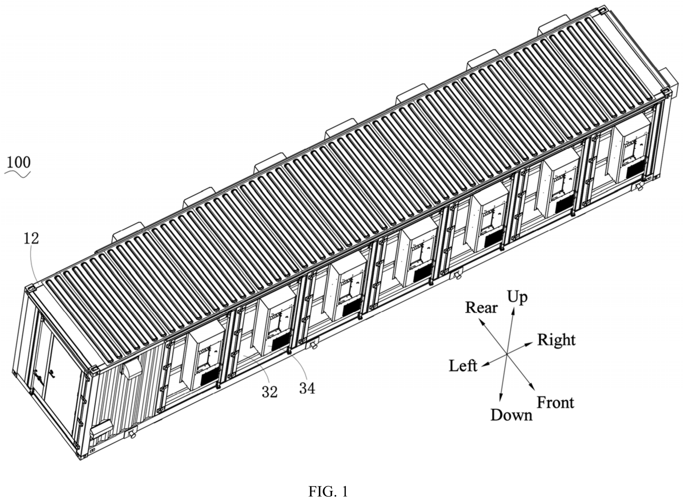

Referring to FIG. 1 to FIG. 4, an energy storage system 100 according to an embodiment of the present disclosure includes an accommodation compartment 12, a battery module 13, an air duct assembly 14, and an adapter assembly 18. The accommodation compartment 12 has an accommodation space 20. A mounting plate 22 is provided in the accommodation space 20 and at a top of the accommodation space 20. The battery module 13 is disposed in the accommodation space 20. The air duct assembly 14 is located in the accommodation space 20. The air duct assembly 14 is configured to dissipate heat from the battery module 13. The adapter assembly 18 is configured to connect the air duct assembly 14 with the mounting plate 22. The adapter assembly 18 is fixedly connected to the mounting plate 22. The adapter assembly 18 is detachably connected to the air duct assembly 14.

In the above energy storage system 100, since the air duct assembly 14 is mounted on the mounting plate 22 arranged at the top of the accommodation space 20 through the adapter assembly 18, a connection area between the adapter assembly 18 and the mounting plate 22 is relatively large, which can reduce deformation of the mounting plate 22. Therefore, positional displacement of the air duct assembly 14 caused by the deformation of the mounting plate 22 is reduced. Thus, an adverse effect on air duct heat dissipation and an influence on an engagement between the air duct assembly and an air outlet of an air conditioner are mitigated. As a result, a utilization rate of the cold air for the heat dissipation blown out by the air conditioner is maximized. In this way, a heat dissipation effect is improved. Meanwhile, the detachable connection between the adapter assembly 18 and the air duct assembly 14 also facilitates maintenance and component replacement of the energy storage system 100.

Specifically, the present disclosure does not specifically limit a material of the accommodation compartment 12. In an embodiment, the accommodation compartment 12 may be made of stainless steel or iron, and may be formed in a form of a container. A shape of the accommodation compartment 12 of the present disclosure is not specifically limited. In an embodiment of FIG. 1, the accommodation compartment 12 is in a rectangular parallelepiped shape.

The accommodation space 20 can accommodate various components of the energy storage system 100, including but not limited to a battery cluster 24, a high-voltage cabinet 26, fire-fighting equipment 28, and the like. In an embodiment, the accommodation space 20 is provided with a mounting plate 22 at a top of accommodation space 20. The mounting plate 22 may be a heat insulation plate, which may be made of a steel plate. The adapter assembly 18 is configured to connect the air duct assembly 14 with the mounting plate 22. In this way, on the one hand, the air duct assembly 14 can be mounted in the accommodation space 20. On the other hand, since the connection area between the adapter assembly 18 and the mounting plate 22 is relatively large, a force exerted by the air duct assembly 14 on the mounting plate 22 (primarily gravity of the air duct assembly 14) can be distributed across more portions of the mounting plate 22, reducing the deformation of the mounting plate 22. Therefore, the positional displacement of the air duct assembly 14 caused by the deformation of the mounting plate 22 is reduced. Thus, the adverse effect on the air duct heat dissipation and the influence on the engagement between the air duct assembly 14 and the air outlet of the air conditioner are mitigated.

The adapter assembly 18 may be detachably connected to the air duct assembly 14 through a snap-fit connection, a screw connection, or the like. The detachable connection between the adapter assembly 18 and the air duct assembly 14 also facilitates the maintenance and the component replacement of the energy storage system 100.

The air duct assembly 14 has the air duct. The air duct assembly 14 is configured to guide cold air for cooling towards the battery cluster 24 through an air duct, allowing the battery modules 13 of the battery cluster 24 to operate within a suitable temperature range.

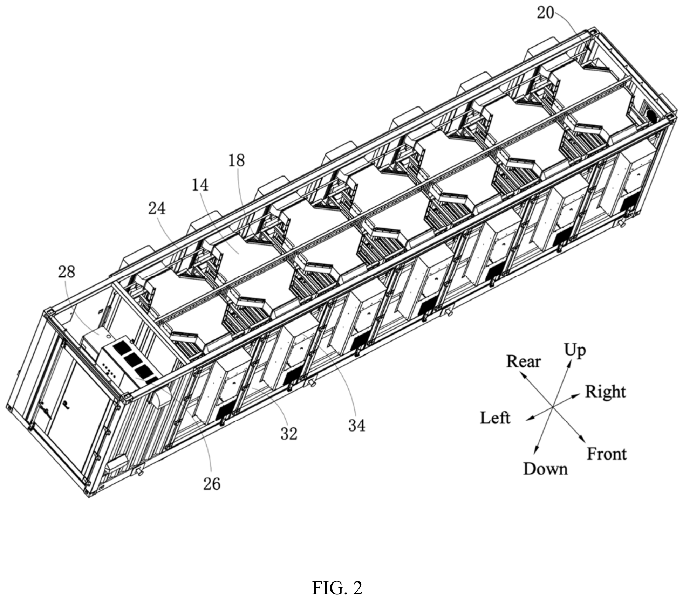

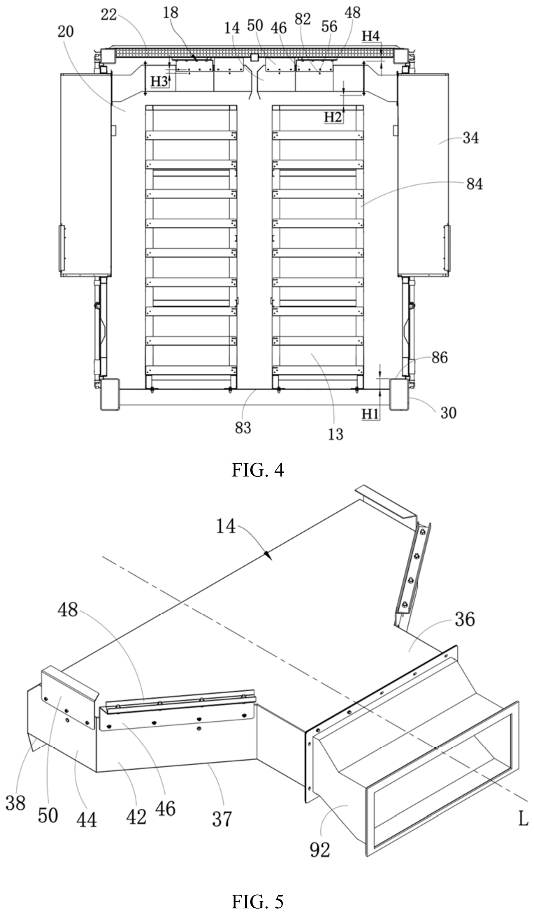

In an embodiment illustrated in FIG. 2, the accommodation space 20 is provided with a plurality of battery clusters 24 arranged in an array. Each of the plurality of battery clusters 24 is provided with one air duct assembly 14 and includes a cluster rack 84 (see FIG. 4) and a plurality of battery modules 13 mounted at the cluster rack 84. The plurality of battery modules 13 may be electrically connected to each other in series, in parallel, or in series-parallel. A plurality of battery clusters 24 may be electrically connected to each other in series, in parallel, or in series-parallel.

The energy storage system 100 may include a plurality of door frames 30. The door frames 30 are correspondingly arranged at a front side plate and a rear side plate of the accommodation compartment 12. Each of the plurality of door frames 30 corresponds to a position of one battery cluster 24. A door body 32 is mounted at the door frame 30. An air conditioning assembly 34 may be mounted at an outer side surface of the door body 32.

It can be understood that in other embodiments, the accommodation space 20 may also be provided with a battery cluster 24. The number of the battery clusters 24 placed in the accommodation space 20 is not specifically limited herein.

In some embodiments, a connection portion, where the adapter assembly 18 and mounting plate 22 are connected, is continuous.

In this way, the deformation of the mounting plate 22 is further reduced.

Specifically, since the connection portion, where the adapter assembly 18 and the mounting plate 22 are connected, is continuous, the force exerted by the air duct assembly 14 on the mounting plate 22 can be continuously distributed along the connection portion where the adapter assembly 18 and the mounting plate 22 are connected.

In addition, the connection between the adapter assembly 18 and the mounting plate 22 may be a surface connection, which further increases the connection area between the adapter assembly 18 and the mounting plate 22. As a result, the force exerted by the air duct assembly 14 on the mounting plate 22 may be more widely distributed.

In summary, the deformation of the mounting plate 22 can be further reduced.

In some embodiments, the adapter assembly 18 is connected to the mounting plate 22 by welding.

In this way, a firm connection between the adapter assembly 18 and the mounting plate 22 can be realized.

Specifically, the connection portion, where the adapter assembly 18 and the mounting plate 22 are connected by the welding, is continuous, which not only makes the connection between the adapter assembly 18 and the mounting plate 22 firm but also can reduce the deformation of the mounting plate 22.

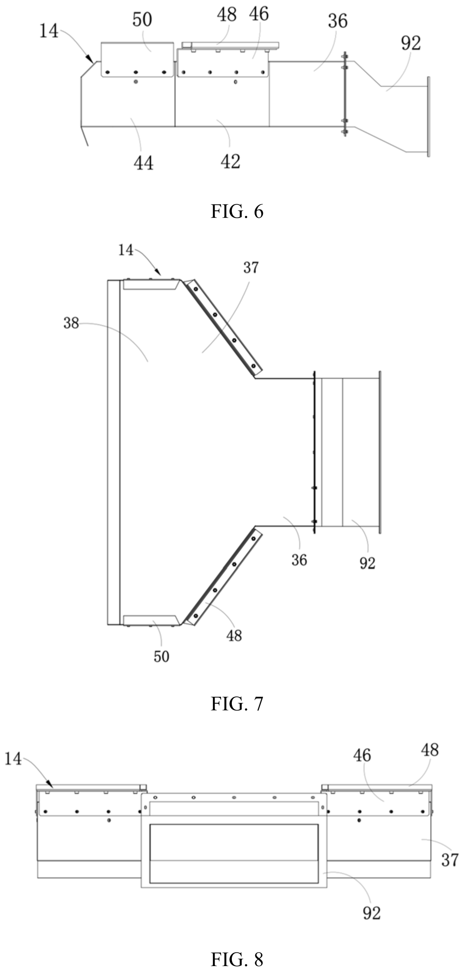

In some embodiments, referring to FIG. 4 and FIG. 5 to FIG. 9, the air duct assembly 14 has an air inlet section 36, a middle section 37, and an air outlet section 38 that are sequentially in communication. Cold air enters through the air inlet section 36, flows through the middle section 37, and flows out of the air outlet section 38 towards the battery module 13 for heat dissipation.

In a flowing direction of the cold air, the air duct assembly 14 includes a first mounting side plate 42 disposed in the middle section 37 and a second mounting side plate 44 disposed in the air outlet section 38. The first mounting side plate 42 is gradually inclined in a direction away from a central axis L of the air duct assembly 14. The second mounting side plate 44 is parallel to the central axis L of the air duct assembly 14.

In this way, an air outlet area of the air duct assembly 14 can be expanded, and heat dissipation uniformity of the battery module 13 can be improved.

Specifically, the cold air flows into the middle section 37 via the air inlet section 36. Since the first mounting side plate 42 is gradually inclined in the direction away from the central axis L of the air duct assembly 14, the area of the air duct section in the middle section 37 is gradually increased outwards. Thus, an air outlet area of the cold air can also be increased. The cold air can be blown out of the air outlet section 38 and flow towards the battery module 13, enabling more battery modules 13 to be cooled. Thus, the heat dissipation uniformity of the battery module 13 can be improved, and the temperature differences among the various battery modules 13 and the temperature differences among various parts of the respective battery module 13 can be reduced.

In some embodiments, the adapter assembly 18 includes a first detachable plate 46, a second detachable plate 48, and a third detachable plate 50. The first detachable plate 46 is detachably connected to each of the first mounting side plate 42 and the second detachable plate 48. The second detachable plate 48 is fixedly connected to the mounting plate 22. The third detachable plate 50 is detachably connected to the second mounting side plate 44. The third detachable plate 50 is fixedly connected to the mounting plate 22.

In this way, the air duct assembly 14 can be mounted onto the mounting plate 22 with enhanced stability.

Specifically, the air inlet section 36 may be connected to an air outlet of the air conditioning assembly 34. The air inlet section 36 is configured to guide cold air blown out of the air outlet of the air conditioning assembly 34 towards the middle section 37. The air outlet section 38 has a blowing port 52 formed at a rear bottom surface of the air outlet section 38. The cold air is blown towards the battery cluster 24 through the blowing port 52.

The air duct assembly 14 is connected to the adapter assembly 18 at two sides through respective mounting side plates, and thus the air duct assembly 14 can be better supported.

When mounting the air duct assembly 14, with the air duct assembly 14 as a main body, the third detachable plate 50 and the first detachable plate 46 are respectively detachably mounted at the second mounting side plate 44 and the first mounting side plate 42 of the air duct assembly 14. During the mounting, a mounting clearance of 2 mm to 3 mm between each of the first detachable plate 46 and the third detachable plate 50 and the respective mounting side plate is maintained, and a gasket may be positioned in this clearance in a middle thereof. After the third detachable plate 50 and the second detachable plate 48 are fixedly connected to the mounting plate 22 at the top of the accommodation compartment 12, the gasket may be removed. Then, the second detachable plate 48 is detachably connected to the first detachable plate 46. Thus, the air duct assembly 14, the first detachable plate 46, the second detachable plate 48, and the third detachable plate 50 are connected together to form an integrated part, and then the integrated part is mounted and fixed at the mounting plate 22 inside the accommodation compartment 12 (as illustrated in FIG. 4). The reason for positioning the integrated part in the accommodation compartment 12 is that the space in accommodation compartment 12 is relatively large, and an air duct unit has a correspondence relationship in terms of the mounting position with each of the air conditioning assembly 34 and the cluster rack 84. Such positioning can greatly reduce a mounting error of the air duct unit. The air duct unit may include an air duct assembly 14 and an adapter assembly 18.

The third detachable plate 50 and the second detachable plate 48 may be welded together with the mounting plate 22 at the top of the accommodation compartment 12. Since the mounting plate 22 itself is a relatively deformation-prone part, the mounting plate would be deformed when the air duct assembly 14 having a certain weight is mounted onto the mounting plate 22. When the third detachable plate 50 and the second detachable plate 48 are welded onto the mounting plate 22, a connection portion, where the third detachable plate 50, the second detachable plate 48 are connected to the mounting plate 22, is continuous to increase rigidity of the mounting plate 22. As a result, the mounting plate 22 cannot collapse under the weight, which would otherwise cause a positional change of the air duct assembly 14.

In a case that the assembling is realized by using mounting through holes, the mounting plates 22 in accommodation compartment 12 are spliced together piece by piece. If the through holes are pre-drilled on the mounting plates 22 and nuts are fitted, when the mounting through holes are arranged on two mounting plates 22, assembling the mounting plates 22 would cause a splicing error. As a result, all mounting through holes on the mounting plates are misaligned with the mounting through holes on the air duct assembly 14 in terms of the position, making it impossible to mount. If the same issue arises with a plurality of mounting plates 22, the positional relationship between the air duct assembly 14 and each of the air conditioning assembly 34 and the cluster rack 84 cannot be guaranteed. To solve this problem, the second detachable plate 48 is welded to the mounting plate 22 as an adapter plate (according to the above-described method, the air duct assembly 14 as a whole is positioned and mounted), which can not only ensure accurate positioning of the air duct assembly 14, but also allow hole positions in the first detachable plate 46 to be aligned with those in the second detachable plate 48. Accordingly, the rigidity of the mounting plate 22 at the top is further increased. As a result, a load-bearing capacity of the mounting plate 22 is enhanced. Therefore, the air duct assembly 14 can be more stably mounted onto the mounting plate 22.

In some embodiments, the first mounting side plate 42 has a first connection portion 54, and the first detachable plate 46 has a second connection portion 55. The first detachable plate 46 and the first mounting side plate 42 are detachably connected by a first fastener 56 passing through the first connection portion 54 and the second connection portion 55.

In this way, assembling and disassembling of the air duct assembly 14 are facilitated.

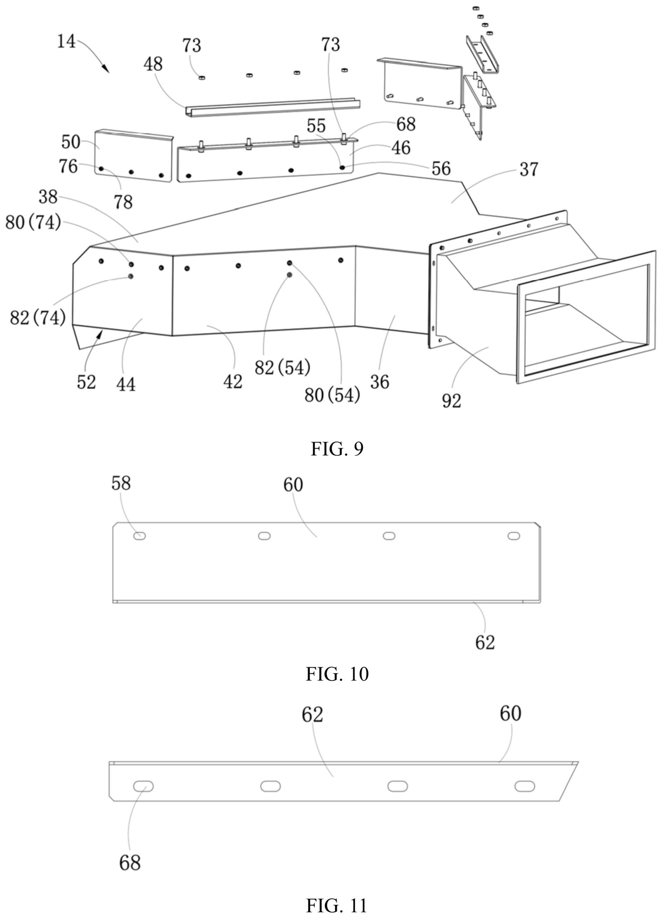

Specifically, in an embodiment of FIG. 9, the first connection portion 54 is a nut, the first fastener 56 is a bolt, and the second connection portion 55 includes a through hole. The first connection portion 54 can be firstly welded and fixed to the first mounting side plate 42. Then, the first fastener 56 is configured to pass through the second connection portion 55 and is threadedly connected to the first connection portion 54. Thus, the first detachable plate 46 can be detachably connected to the air duct assembly 14. During disassembling, the air duct assembly 14 can be detached from the first detachable plate 46 by removing the first fastener 56. Preferably, a plurality of first connection portions 54, a plurality of first fasteners 56, and a plurality of second connection portions 55 are provided. The plurality of first connection portions 54, the plurality of first fasteners 56, and the plurality of second connection portions 55 are provided in one-to-one correspondence and are arranged along a straight line.

In other embodiments, the first connection portion 54 may be a threaded hole formed on the first mounting side plate 42, and the first fastener 56 may be a bolt. The bolt is engaged with threads of the first connection portion 54 without requiring a nut. Alternatively, the first connection portion 54 may be a through hole, and the first fastener 56 includes a bolt and a nut. The bolt is configured to pass through the through hole and is engaged with the nut for a detachable connection.

It can be understood that in other embodiments, the first connection portion 54 is not limited to a nut, and may also include a fixing hole formed at the first mounting side plate 42 or a snap-fit component, and the first fastener 56 is not limited to a bolt, and may also be a pin, a mounting post, etc., or an engaging element detachably connected with a snap-fit component. Specific limitations are not made herein.

In some embodiments, the first detachable plate 46 has a first mounting hole 68, and the second detachable plate 48 has a second mounting hole 70. The first detachable plate 46 and the second detachable plate 48 are detachably connected by a second fastener 73 passing through the first mounting hole 68 and the second mounting hole 70.

In this way, assembling efficiency of the first detachable plate 46 and the second detachable plate 48 is improved.

Specifically, each of the first detachable plate 46 and the second detachable plate 48 has the mounting hole, and the second fastener 73 may include a bolt and a nut. The mounting hole is designed to be slightly larger to allow for assembling tolerance when the bolt and the nut are connected through the mounting hole, eliminating the requirement for assemblers to achieve extremely high operating precision. In this way, the operation is relatively simple, and assembling efficiency is improved.

In some embodiments, referring to FIG. 10 to FIG. 15, the first detachable plate 46 includes a first sub-plate 60 and a second sub-plate 62 perpendicularly connected to the first sub-plate 60. The first sub-plate 60 is detachably connected to the first mounting side plate 42. The second detachable plate 48 includes a bottom plate 64 and two support plates 66. Each of the support plates 66 is perpendicular to the bottom plate 64. The two support plates 66 are respectively connected to two side edges of the bottom plate 64 that are opposite to each other in a width direction of the bottom plate 64. The bottom plate 64 is detachably connected to the second sub-plate 62. The two support plates 66 are fixedly connected to the mounting plate 22.

In this way, the mounting position of the air duct assembly 14 can be ensured to be accurate.

Specifically, in an embodiment, the first sub-plate 60 has a second connection portion 55. The second sub-plate 62 has a first mounting hole 68. The first mounting side plate 42 has a first connection portion 54 (such as a nut). The bottom plate 64 has a second mounting hole 70. The nut of the second fastener 73 is welded at the second mounting hole 70. First, the first fastener 56 may be configured to pass through the second connection portion 55 and connected to the first connection portion 54 to connect the first detachable plate 46 to the air duct assembly 14. In this case, the first sub-plate 60 may be in clearance fit with the first mounting side plate 42, that is, the first fastener 56 is not tightly fastened. Then, the bolt of the second fastener 73 is used to pass through the first mounting hole 68 and the second mounting hole 70 and be connected to a nut of the third fastener 73 at the bottom plate 64, to allow the first detachable plate 46 to be detachably connected to the second detachable plate 48. In an embodiment illustrated in FIG. 10 and FIG. 11, each of the through hole of the second connection portion 55 and the first mounting hole 68 is a slot-shaped hole. In this way, it is convenient to adjust an alignment position of the second connection portion 55 and the first connection portion 54 at the air duct assembly 14 as well as an alignment position of the first mounting hole 68 and the nut of the third fastener 73. Preferably, a plurality of second fasteners 73, a plurality of first mounting holes 68, and a plurality of second mounting holes 70 are provided. The plurality of second fasteners 73, the plurality of first mounting holes 68, and the plurality of second mounting holes 70 are provided in one-to-one correspondence and arranged along a straight line.

Afterwards, the second detachable plate 48 is fixed to the mounting plate 22 through two support plates 66. For example, the two support plates 66 may be fixed to the mounting plate 22 by welding, and then the first fastener 56 at the first sub-plate 60 is tightly screwed to fasten the first detachable plate 46 and the air duct assembly 14. In the above mounting process, by firstly connecting the first sub-plate 60 and the first mounting side plate 42 with a clearance fit and then fixedly connecting the first detachable plate 46 and the second detachable plate 48, the first detachable plate 46 and the second detachable plate 48 can be pre-mounted to the air duct assembly 14 to form an integrated part. The integrated part is connected to the mounting plate 22 by fixedly connecting the second detachable plate 48 with the mounting plate 22, to realize pre-positioning of the air duct assembly 14. Afterwards, the first sub-plate 60 and the first mounting side plate 42 are fastened to realize final positioning of the air duct assembly 14. In this way, an accurate mounting position of the air duct assembly 14 can be ensured.

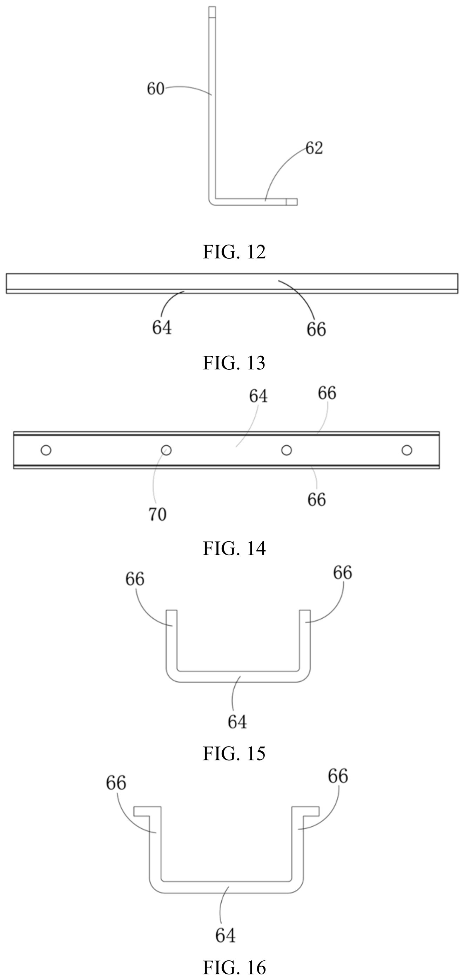

Referring to FIG. 16. In other embodiments, each of the two support plates 66 is a flange extending both in vertical and horizontal directions. The flange is surface-connected to the mounting plate 22 to enhance connection strength and reliability.

In some embodiments, the second mounting side plate 44 is provided with a third connection portion 74, the third detachable plate 50 has a fourth connection portion 78, and the third detachable plate 50 is detachably connected to the second mounting side plate 44 in such a manner that a third fastener 76 passes through the third connection portion 74 and the fourth connection portion 78.

In this way, the assembling and the disassembling of the air duct assembly 14 are facilitated.

Specifically, in an embodiment of FIG. 9, the third connection portion 74 is a nut, the third fastener 76 is a bolt, and the fourth connection portion 78 includes a through hole (see FIG. 9 and FIG. 17 to FIG. 19). The third connection portion 74 may be firstly welded and fixed to the second mounting side plate 44. Then, the third fastener 76 is used to pass through the fourth connection portion 78 and be threadedly connected to the third connection portion 74. Thus, the third detachable plate 50 can be detachably connected to the air duct assembly 14. During disassembling, the air duct assembly 14 can be detached from the third detachable plate 50 by removing the third fastener 76. Preferably, a plurality of third connection portions 74, a plurality of third fasteners 76, and a plurality of fourth connection portions 78 are provided. The plurality of third connection portions 74, the plurality of third fasteners 76, and the plurality of fourth connection portions 78 are provided in one-to-one correspondence and arranged along a straight line.

In other embodiments, the third connection portion 74 may be a threaded hole formed at the second mounting side plate 44, and the third fastener 76 may be a bolt. The bolt is engaged with threads of the third connection portion 74 without requiring a nut. Alternatively, the third connection portion 74 may be a through hole, and the third fastener 76 includes a bolt and a nut. The bolt passes through the through hole to be engaged with the nut for a detachable connection.

It can be understood that in other embodiments, the third connection portion 74 is not limited to the nut, and may also include a fixing hole formed at the second mounting side plate 44 or a snap-fit component. The third fastener 76 is not limited to the bolt, and may also be a pin, a mounting post, etc., or an engaging element detachably connected with a snap-fit component. Specific limitations are not made herein.

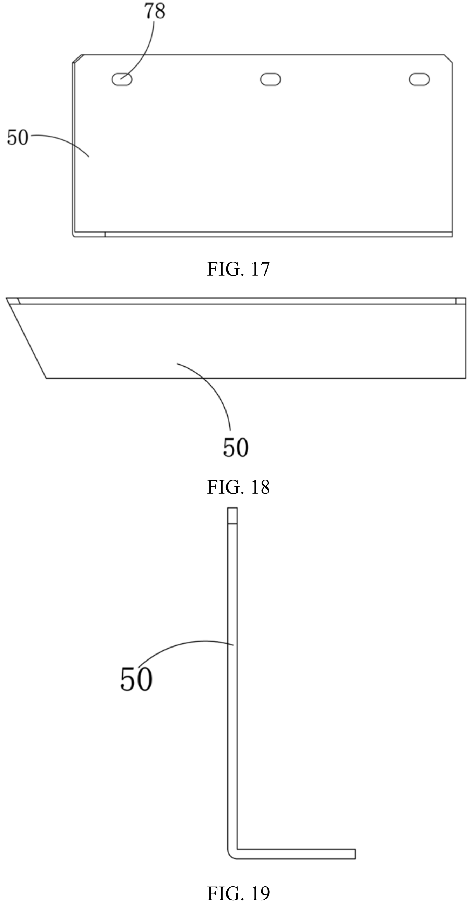

In embodiments illustrated in FIG. 17 to FIG. 19, the structure of the third detachable plate 50 is similar to that of the first detachable plate 46, and a top edge of the third detachable plate 50 has a height substantially consistent with that of a top edge of the second detachable plate 48.

In an embodiment illustrated in FIG. 17, the through hole of the fourth connection portion 78 is a slot-shaped hole. In this way, it is convenient to adjust an alignment position of the fourth connection portion 78 and the third connection portion 74 at the air duct assembly.

In some embodiments, each of the first mounting side plate 42 and the second mounting side plate 44 is provided with a fixed mounting portion 80 and an adjustment mounting portion 82 that are arranged vertically. The adjustment mounting portion 82 is located below the fixed mounting portion 80. The first connection portion 54 is the fixed mounting portion 80 or the adjustment mounting portion 82. The third connection portion 74 is the fixed mounting portion 80 or the adjustment mounting portion 82.

In this way, maintenance or replacement of the cluster rack 84 are facilitated.

Specifically, a cluster rack 84 is disposed in the accommodation space 20, and the air duct assembly 14 is located above the cluster rack 84. When the cluster rack 84 is maintained or replaced, the cluster rack 84 needs to be moved upwards and moved out of the accommodation compartment 12. Therefore, a height of the air duct assembly 14 is increased by the adjustment mounting portion 82. Specifically, during normal operation of the air duct assembly 14, the first connection portion 54 is the fixed mounting portion 80, and the third connection portion 74 is the fixed mounting portion 80. In this case, the air duct assembly 14 is positioned at relatively low level and close to the cluster rack 84. When the cluster rack 84 is maintained or replaced, the first connection portion 54 is the adjustment mounting portion 82, and the third connection portion 74 is the adjustment mounting portion 82. In this case, the air duct assembly 14 is positioned at a relatively high level. As a result, a vertical movement space for the cluster rack 84 is increased, facilitating the maintenance or the replacement of the cluster rack 84.

In some embodiments, the air duct assembly 14 is located at a first position in a case that each of the first connection portion 54 and the third connection portion 74 is the fixed mounting portion 80. The air duct assembly is located at a second position in a case that each of the first connection portion 54 and the third connection portion 74 is the adjustment mounting portion 82. The first position is at a level lower than that of the second position.

In this way, the height adjustment of the air duct assembly 14 is realized.

Specifically, the adapter assembly 18 is detachably connected the first connection portion 54 and the third connection portion 74. A corresponding position of the air duct assembly 14 is the second position in a case that each of the first connection portion 54 and the third connection portion 74 is the adjustment mounting portion 82. A corresponding position of the air duct assembly 14 is the first position in a case that each of the first connection portion 54 and the third connection portion 74 is the fixed mounting portion 80. Since the first position is at a level lower than that of the second position, in a case that the air duct assembly 14 is at the second position, a distance between the air duct assembly 14 and the cluster rack 84 is greater than that at the first position. Thus, the vertical movement space for the cluster rack 84 is increased in a case that the air duct assembly 14 is at the second position, facilitating the maintenance or replacement of the cluster rack 84.

In some embodiments, the accommodation space 20 is provided with a base plate 83 at a bottom of the accommodation space 20. The energy storage system 100 further includes a cluster rack 84. The cluster rack 84 is arranged at the base plate 83 and located below the air duct assembly 14. The base plate 83 of the accommodation space 20 is provided with a stop strip 86 at an edge of the base plate 83 of the accommodation space 20.

Referring to FIG. 4, the energy storage system 100 satisfies the following condition: H2+H3>H1, wherein: H1 represents a height of a portion of the stop strip 86 that protrudes from the base plate 83; H2 represents a vertical distance between the air duct assembly 14 and the cluster rack 84 in a case that the air duct assembly 14 is located at the first position; and H3 represents a vertical distance between the fixed mounting portion 80 and the adjustment mounting portion 82.

In this way, ease of the maintenance or the replacement of cluster rack 84 is further improved.

Specifically, under a normal operating condition, each of the first connection portion 54 and the third connection portion 74 is the fixed mounting portion 80 and connected to the adapter assembly 18. In an embodiment of FIG. 9, the third detachable plate 50 is detachably connected to the air duct assembly 14 by connecting the third fastener 76 with the fixed mounting portion 80. The first detachable plate 46 is detachably connected to the air duct assembly 14 by connecting the first fastener 56 with the fixed mounting portion 80. The first connection portion 54 and the third connection portion 74 may each include a nut, and the first fastener 56 and the third fastener 76 may each include a bolt.

In a maintenance or replacement state, each of the first connection portion 54 and the third connection portion 74 is the adjustment mounting portion 82 and connected to the adapter assembly 18. The third detachable plate 50 is detachably connected to the air duct assembly 14 by connecting the third fastener 76 with the adjustment mounting portion 82. The first detachable plate 46 is detachably connected to the air duct assembly 14 by connecting the first fastener 56 with the adjustment mounting portion 82.

The stop strip 86 is a protrusion formed by a lower crossbeam of the door frame 30. When the cluster rack 84 needs to be moved out of accommodation compartment 12 for maintenance or replacement, the connection between the first connection portion 54 and the first fastener 56 as well as the connection between the third connection portion 74 and the third fastener 76 are firstly released. For example, the previously connected fixing bolts of the air duct assembly 14 are removed. The air duct assembly 14 is moved vertically upwards by a certain height, lifting it upwards to a position where the adjustment mounting portion 82 at the first mounting side plate 42 is overlapped with the second connection portion 55 and the adjustment mounting portion 82 at the second mounting side plate 44 is overlapped with the fourth connection portion 78. The adapter assembly 18 is then locked at the two adjustment mounting portions 82 to increase the height of the air duct assembly 14, leaving room for the cluster rack 84. As a result, the cluster rack 84 can be first raised to the height H1 as illustrated in FIG. 4 to be flush with or slightly higher than a door threshold, and then moved outwards. Since a vertically raised height H4 of the air duct assembly 14 is equal to the vertical distance H3 between the fixed mounting portion 80 and the adjustment mounting portion 82, a distance between a top of the cluster rack 84 and the air duct assembly 14 is H2, and H2+H3>H1, the cluster rack 84 can be moved out smoothly. In this embodiment, during maintenance or replacement of the cluster rack 84, the air duct assembly 14 need not be completely moved out, but only needs to be moved upwards.

In an embodiment, referring to FIG. 5 to FIG. 9, the air duct unit further includes an air duct adapter 92. The air duct assembly 14 is detachably connected to the air duct adapter 92. In the process that the air duct assembly 14 is moved upwards, the air duct adapter 92 needs to be detached.

In some embodiments, the accommodation compartment 12 is provided with a door frame 30 at a side plate of the accommodation compartment 12. The energy storage system 100 satisfies the following condition: W1>W2, where W1 represents a width of the door frame 30, and W2 represents a width of the air duct assembly 14.

In this way, the air duct assembly 14 can be easily moved out of the accommodation compartment 12.

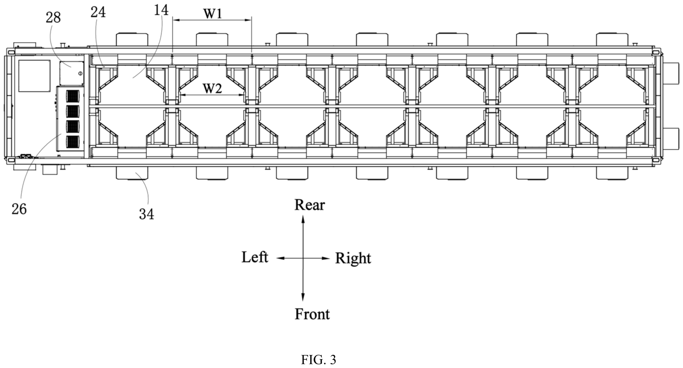

Specifically, since the energy storage system 100 satisfies the condition W1>W2, when the air duct assembly 14 needs to be moved out of the accommodation compartment 12 for maintenance, the air duct assembly 14 is lowered by a certain height after the bolts at the air duct assembly 14 are removed. As a result, the air duct assembly 14 can be directly removed once an upper end of the air duct assembly 14 is slightly lower than an upper crossbeam of the door frame 30. As illustrated in FIG. 3, there is no obstruction in the width direction for the movement of air duct assembly. During removing the air duct assembly 14, the air duct assembly 14 can be removed from the accommodation compartment 12 without erecting the air duct assembly 14, thereby facilitating the removal of the air duct assembly 14 from the accommodation compartment 12.

In some embodiments, the energy storage system 100 includes an air conditioning assembly 34 and an air duct adapter 92. The air conditioning assembly 34 has an air outlet. The air inlet section 36 is connected to the air outlet by the air duct adapter 92. The air duct adapter 92 and the air duct assembly 14 are detachably connected.

In this way, positions of the air conditioning assembly 34 and the air duct assembly 14 can be adapted.

Specifically, in an embodiment illustrated in FIG. 4, the air outlet of air conditioning assembly 34 is located at an upper half portion of an inner side surface of the air conditioning assembly 34, and the air duct assembly 14 is mounted at a mounting plate 22 at the top of accommodation space 20. The air duct assembly 14 is positioned at a higher level, and the air outlet is located at a lower level. The air duct adapter 92 features two ends, with one end positioned relatively lower than the other end. The lower end is connected to the air outlet, while the higher end is connected to the air inlet section 36. Therefore, the air inlet section 36 and the air outlet that have different heights can be connected through the air duct adapter 92, allowing the cold air from the air conditioning assembly 34 to smoothly flow into the air duct assembly 14.

The connection between the air duct adapter 92 and the air inlet section 36 is a detachable connection. When the air duct assembly 14 as a whole needs to be removed from the accommodation compartment 12, the air inlet section 36 can be detached from the air duct adapter 92, avoiding the need to move too many components.

In embodiments illustrated in FIG. 1 and FIG. 2, a plurality of rows of battery clusters 24 are arranged in the accommodation space 20 in a left-right direction. The energy storage system 100 includes a plurality of door frames 30. Each of the plurality of door frames 30 corresponds to a position of the battery cluster 24. A door body 32 is mounted at the door frame 30. The air conditioning assembly 34 may be mounted at an outer side surface of the door body 32. When the energy storage system 100 needs to be maintained, the door body 32 may be opened. If the cluster rack 84 needs to be removed out of the accommodation compartment 12, the fixed mounting portion 80 of the air duct assembly 14 is first detached from the adapter assembly 18, and then moved upwards by a certain height. Then, the adjustment mounting portion 82 of the air duct assembly 14 is connected to the adapter assembly 18. Subsequently, the cluster rack 84 is moved out.

When the air duct assembly 14 needs to be removed out of the accommodation compartment 12, the bolts at the air duct assembly 14 are released and removed, and the air duct assembly 14 is lowered by a certain height such that the air duct assembly 14 can be directly removed once the upper end of the air duct assembly 14 is slightly lower than the upper crossbeam of the door frame 30.

In summary, in the energy storage system 100 according to the embodiments of the present disclosure, the easy disassembly, maintenance, and replacement of the air duct assembly 14 is realized. The mounting and the positioning of the air duct assembly 14 are accurate. The deformation of the mounting plate 22 at the top of the air duct assembly 14 is reduced. The cluster rack 84 can be moved out of the accommodation compartment 12 from the side door for the maintenance or the replacement.

In the description of this specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example.

Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

**Claims**

1. An energy storage system, comprising:

   an accommodation compartment having an accommodation space, a mounting plate being provided in the accommodation space and at a top of the accommodation space;
   a battery module disposed in the accommodation space;
   an air duct assembly located in the accommodation space, the air duct assembly being configured to dissipate heat from the battery module; and
   an adapter assembly connecting the air duct assembly with the mounting plate, the adapter assembly being fixedly connected to the mounting plate and detachably connected to the air duct assembly.

2. The energy storage system according to claim 1, wherein a connection portion, where the adapter assembly and the mounting plate are connected, is continuous.

3. The energy storage system according to claim 1 or 2, wherein the adapter assembly is connected to the mounting plate by welding.

4. The energy storage system according to any one of claims 1 to 3, wherein:

   the air duct assembly has an air inlet section, a middle section, and an air outlet section that are sequentially in communication, cold air entering through the air inlet section, flowing through the middle section, and flowing out of the air outlet section towards the battery module for heat dissipation; and
   in a flowing direction of the cold air, the air duct assembly comprises a first mounting side plate disposed in the middle section and a second mounting side plate disposed in the air outlet section, wherein the first mounting side plate is gradually inclined in a direction away from a central axis of the air duct assembly, and wherein the second mounting side plate is parallel to the central axis of the air duct assembly.

5. The energy storage system according to claim 4, wherein the adapter assembly comprises:

   a first detachable plate;
   a second detachable plate, the first detachable plate being detachably connected to each of the first mounting side plate and the second detachable plate, and the second detachable plate being fixedly connected to the mounting plate; and
   a third detachable plate detachably connected to the second mounting side plate, the third detachable plate being fixedly connected to the mounting plate.

6. The energy storage system according to claim 5, wherein:

   the first mounting side plate has a first connection portion;
   the first detachable plate has a second connection portion; and
   the first detachable plate and the first mounting side plate are detachably connected by a first fastener passing through the first connection portion and the second connection portion.

7. The energy storage system according to claim 6, wherein:

   the first detachable plate has a first mounting hole;
   the second detachable plate has a second mounting hole; and
   the first detachable plate and the second detachable plate are detachably connected by a second fastener passing through the first mounting hole and the second mounting hole.

8. The energy storage system according to claim 7, wherein:

   the first detachable plate comprises a first sub-plate and a second sub-plate that are perpendicularly connected to each other, the first sub-plate being detachably connected to the first mounting side plate; and
   the second detachable plate comprises a bottom plate and two support plates that are perpendicular to the bottom plate, wherein the two support plates are respectively connected to two side edges of the bottom plate in a width direction of the bottom plate, wherein the bottom plate is detachably connected to the second sub-plate, and wherein the two support plates are fixedly connected to the mounting plate.

9. The energy storage system according to any one of claims 6 to 8, wherein:

the second mounting side plate has a third connection portion;
the third detachable plate has a fourth connection portion; and
the third detachable plate and the second mounting side plate are detachably connected to each other by a third fastener passing through the third connection portion and the fourth connection portion.

10. The energy storage system according to claim 9, wherein each of the first mounting side plate and the second mounting side plate is provided with a fixed mounting portion and an adjustment mounting portion that are arranged vertically, the adjustment mounting portion being located below the fixed mounting portion, wherein the first connection portion is the fixed mounting portion or the adjustment mounting portion, and wherein the third connection portion is the fixed mounting portion or the adjustment mounting portion.

11. The energy storage system according to claim 10, wherein:

the air duct assembly is located at a first position in a case that each of the first connection portion and the third connection portion is the fixed mounting portion; and
the air duct assembly is located at a second position in a case that each of the first connection portion and the third connection portion is the adjustment mounting portion, wherein the first position is at a level lower than that of the second position.

12. The energy storage system according to claim 11, wherein:

the accommodation space is provided with a base plate at a bottom of the accommodation space;
the energy storage system further comprises a cluster rack disposed on the base plate and located below the air duct assembly, the base plate being provided with a stop strip at an edge of the base plate; and
the energy storage system satisfies the following condition:

$$H2+H3>H1,$$

where:

H1 represents a height of a portion of the stop strip that protrudes from the base plate;
H2 represents a vertical distance between the air duct assembly and the cluster rack in a case that the air duct assembly is located at the first position; and
H3 represents a vertical distance between the fixed mounting portion and the adjustment mounting portion.

13. The energy storage system according to any one of claims 4 to 12, further comprising:

an air conditioning assembly having an air outlet; and
an air duct adapter connecting the air inlet section with the air outlet, the air duct adapter and the air duct assembly being detachably connected.

14. The energy storage system according to any one of claims 1 to 13, wherein:

the accommodation compartment is provided with a door frame at a side plate of the accommodation compartment; and
the energy storage system satisfies the following condition:

$$W1>W2,$$

where:

W1 represents a width of the door frame; and
W2 represents a width of the air duct assembly.

FIG. 1

FIG. 2

FIG. 3

FIG. 4

FIG. 5

FIG. 6

FIG. 7

FIG. 8

14
48
73
73
50
76
55
68
46
38
56
37
80 (74)
78
82 (74)
52
44
42
82 (54)
80 (54)
36
92

FIG. 9

58
60
62

FIG. 10

62
60
68

FIG. 11

60

62

FIG. 12

64          66

FIG. 13

64      66

66

70

FIG. 14

66          66

64

FIG. 15

66          66

64

FIG. 16

78

50

**FIG. 17**

50

**FIG. 18**

50

**FIG. 19**

## INTERNATIONAL SEARCH REPORT

| International application No. |
| --- |
| **PCT/CN2024/072897** |

**A.    CLASSIFICATION OF SUBJECT MATTER**

H01M10/613(2014.01)i;  H01M10/6556(2014.01)i;  H01M10/6563(2014.01)i;  H01M50/244(2021.01)i;
B65D90/22(2006.01)i

According to International Patent Classification (IPC) or to both national classification and IPC

**B.    FIELDS SEARCHED**

Minimum documentation searched (classification system followed by classification symbols)

IPC; H01M,B65D

Documentation searched other than minimum documentation to the extent that such documents are included in the fields searched

Electronic data base consulted during the international search (name of data base and, where practicable, search terms used)

CNABS: CNTXT; CNKI; VEN; ENTXT; IEEE; CNKI: 安装, 安装板, 储能, 风道, 可拆卸, 转接. 连接, energy, storage, air,
duct, switching. assembly, mounting, dismounting, plate, detachable, transfer, connect

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116014292 A (XIAMEN HITHIUM ENERGY STORAGE TECHNOLOGY CO., LTD.) 25 April 2023 (2023-04-25)<br>claims 1-14 | 1-14 |
| X | CN 218414752 U (XIAMEN HITHIUM ENERGY STORAGE TECHNOLOGY CO., LTD.) 31 January 2023 (2023-01-31)<br>description, paragraphs 0066-0122, and figures 1-14 | 1-4, 13-14 |
| A | CN 113540643 A (CHINA HUADIAN ENGINEERING CO., LTD. et al.) 22 October 2021 (2021-10-22)<br>entire document | 1-14 |
| A | CN 214176104 U (SHENZHEN CLOU ELECTRONICS CO., LTD.) 10 September 2021 (2021-09-10)<br>entire document | 1-14 |
| A | CN 114614140 A (SHENZHEN CLOU ELECTRONICS CO., LTD.) 10 June 2022 (2022-06-10)<br>entire document | 1-14 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 April 2024** | **19 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

### C.   DOCUMENTS CONSIDERED TO BE RELEVANT

| Category* | Citation of document, with indication, where appropriate, of the relevant passages | Relevant to claim No. |
|---|---|---|
| A | CN 109720749 A (BYD CO., LTD.) 07 May 2019 (2019-05-07)<br>entire document | 1-14 |
| A | US 2022093989 A1 (GM GLOBAL TECHNOLOGY OPERATIONS LLC) 24 March 2022 (2022-03-24)<br>entire document | 1-14 |

Form PCT/ISA/210 (second sheet) (July 2022)

**INTERNATIONAL SEARCH REPORT**
Information on patent family members

| International application No. |
| --- |
| **PCT/CN2024/072897** |

| Patent document cited in search report | | | Publication date (day/month/year) | Patent family member(s) | | | Publication date (day/month/year) |
| --- | --- | --- | --- | --- | --- | --- | --- |
| CN | 116014292 | A | 25 April 2023 | None | | | |
| CN | 218414752 | U | 31 January 2023 | None | | | |
| CN | 113540643 | A | 22 October 2021 | CN | 215834615 | U | 15 February 2022 |
| CN | 214176104 | U | 10 September 2021 | None | | | |
| CN | 114614140 | A | 10 June 2022 | CN | 217239575 | U | 19 August 2022 |
| CN | 109720749 | A | 07 May 2019 | CN | 207684216 | U | 03 August 2018 |
| US | 2022093989 | A1 | 24 March 2022 | DE | 102021110496 | A1 | 24 March 2022 |

Form PCT/ISA/210 (patent family annex) (July 2022)

## EP 4 654 332 A1

**Patent documents cited in the description**

- CN 2023101068848